# EUROPÄISCHE PATENTSCHRIFT

(11) **EP 3 916 286 B1**
(45) Veröffentlichungstag und Bekanntmachung des Hinweises auf die Patenterteilung: **02.11.2022**
(21) Anmeldenummer: 21164858.9
(22) Anmeldetag: 25.03.2021
(51) Int. Cl.: F16P 3/14

(54) **OPTOELEKTRONISCHER SICHERHEITSSENSOR UND VERFAHREN ZUR ABSICHERUNG EINER MASCHINE**
OPTOELECTRONIC SAFETY SENSOR AND METHOD FOR SECURING A MACHINE
CAPTEUR OPTOÉLECTRONIQUE DE SÉCURITÉ ET PROCÉDÉ DE SÉCURISATION D'UNE MACHINE

(30) Priorität: 29.05.2020 DE 102020114488
(43) Veröffentlichungstag der Anmeldung: 01.12.2021
(73) Patentinhaber: SICK AG, 79183 Waldkirch (DE)
(72) Erfinder: Hammes, Dr. Markus, 79117 Freiburg (DE)

(56) Entgegenhaltungen:
- EP-A1- 3 748 216
- DE-B4- 10 360 174
- US-A1- 2003 076 224
- US-B1- 10 325 485
- US-B2- 8 139 204

## Beschreibung

Die Erfindung betrifft einen optoelektronischen Sicherheitssensor und ein Verfahren zur Absicherung einer Maschine nach dem Oberbegriff von Anspruch 1 beziehungsweise 13.

Das primäre Ziel der Sicherheitstechnik ist, Personen vor Gefahrenquellen zu schützen, wie sie beispielsweise Maschinen im industriellen Umfeld darstellen. Die Maschine wird mit Hilfe von Sicherheitssensoren überwacht, und wenn demnach eine Situation vorliegt, in der eine Person gefährlich nahe an die Maschine zu gelangen droht, wird eine geeignete Absicherungsmaßnahme ergriffen.

Sicherheitssensoren oder sichere Sensoren, d.h. im Sinne der Sicherheitstechnik für den Personenschutz eingesetzte Sensoren, müssen besonders zuverlässig arbeiten und deshalb hohe Sicherheitsanforderungen erfüllen, beispielsweise die Norm EN13849 für Maschinensicherheit und die Gerätenorm IEC61496 oder EN61496 für berührungslos wirkende Schutzeinrichtungen (BWS). Zur Erfüllung dieser Sicherheitsnormen sind eine Reihe von Maßnahmen zu treffen, wie sichere elektronische Auswertung durch redundante, diversitäre Elektronik, Funktionsüberwachung oder Überwachung der Verschmutzung optischer Bauteile.

Das gängige Absicherungskonzept sieht vor, dass Schutzfelder konfiguriert werden, die während des Betriebs der Maschine vom Bedienpersonal nicht betreten werden dürfen. Bei einem Fahrzeug dreht sich diese Betrachtung auch um, es dürfen weder Personen in den Fahrweg treten, noch darf das Fahrzeug sich zu schnell in eine Richtung bewegen, in der sich Personen aufhalten. Erkennt der Sensor einen unzulässigen Schutzfeldeingriff, so löst er eine sicherheitsgerichtete Reaktion aus, die in einem Abbremsen, Ausweichen oder notfalls einem sofortigen Stopp der Maschine besteht.

Im industriellen Umfeld werden am häufigsten optoelektronische Sicherheitssensoren eingesetzt, die eine ein- oder zweidimensionale Information erfassen, wie Sicherheitslichtgitter oder Sicherheitslaserscanner. Der Stand der Technik kennt auch 3D-Sensoren zur Erfassung dreidimensionaler Bilddaten. Dazu zählen vor allem 3D-Kameras in unterschiedlichen Technologien, beispielsweise Stereoskopie, Triangulation, Lichtlaufzeit, mit Auswertung der Störung passiver zweidimensionaler Muster oder von projizierten Beleuchtungsmustern. Solche 3D-Sensoren nehmen im Gegensatz zu einer üblichen zweidimensionalen Kamera Bilder auf, die in ihren Pixeln einen Abstandswert enthalten. Diese tiefenaufgelösten oder dreidimensionalen Bilddaten werden auch als Tiefenkarte bezeichnet. Weiterhin bekannt sind Laserscanner, die mehrere Abtastebenen erfassen oder ihren Elevationswinkel variieren. Auch mit solchen 3D-Sensoren können Schutzfelder überwacht werden, beispielsweise aus der Vogelperspektive über einer Roboterzelle. Die EP 3 421 191 A1 beispielsweise wählt einen anderen Sicherheitsansatz, bei dem der kürzeste Abstand von der überwachten Maschine zu den erfassten Objekten bestimmt und damit die Gefahrenlage bewertet wird (Speed-and-Separation-Monitoring),

Trotz der teilweise sehr komplexen Eingangsdaten und einer regelmäßig zur Erfüllung der Sicherheitsnormen ausgesprochen anspruchsvollen Auswertung ist am Ende eine lediglich binäre Entscheidung zu treffen, ob eine sicherheitsgerichtete Reaktion zu erfolgen hat oder nicht. Dies lässt sich begrifflich in einer Auslöseschwelle zusammenfassen. In der konkreten Umsetzung kann die Auslöseschwelle komplex und hochdimensional sein und verschiedene Aspekte berücksichtigen, etwa zeitliche oder geometrische Eigenschaften oder beispielsweise einen Verlauf oder Pegel eines Empfangssignals bewerten.

Grundsätzlich besteht immer die Möglichkeit, dass die binäre Entscheidung falsch getroffen wird. Zwei Fehler sind dabei denkbar: Obwohl sich eine Person in Gefahr befindet, wird die Situation als ungefährlich eingeschätzt, oder es wird eine Gefahr erkannt, die in Wirklichkeit nicht vorliegt. Der erstgenannte Fehler ist sicherheitskritisch, der zweitgenannte Fehler erzeugt unnötige Sicherheitsreaktionen und wirkt sich daher nachteilig auf die Verfügbarkeit aus. Es ist eine große und für die Leistungsfähigkeit des Sicherheitssensors entscheidende Herausforderung, die Auslöseschwelle so abzustimmen, dass eine gute Balance zwischen Detektionssicherheit und Robustheit gefunden ist.

Herkömmliche Sicherheitssensoren arbeiten mit einer fest eingestellten Auslöseschwelle, die bei der Entwicklung oder im Rahmen des Konfigurationsprozesses festgelegt wird. Diese Auslöseschwelle muss sensitiv genug gewählt werden, um alle Eventualitäten zu berücksichtigen. Die Sicherheit hat hier Vorrang, da im Zweifelsfall keine Person zugunsten der Maschinenlaufzeit gefährdet werden darf. Das bedeutet aber, dass die am Maßstab bestimmter kritischer Situationen empfindlich eingestellte feste Auslöseschwelle auch in anderen Situationen zum Tragen kommt, in denen das gar nicht erforderlich wäre. Die Wahrscheinlichkeit einer unnötigen Auslösung der Sicherheitsfunktion steigt damit an, und dies hat erhebliche nachteilige Auswirkungen auf die Verfügbarkeit.

Bei einer Schutzfeldüberwachung bewertet herkömmlich die Auslöseschwelle nur Sensorinformationen aus dem Schutzfeld, es werden keine sicherheitstechnisch verwendbaren Sensorinformationen aus Bereichen außerhalb des konfigurierten Schutzfeldes gewonnen. Die Informationsbasis ist daher kleiner und bisweilen deutlich kleiner als das, was der Sensor an sich bereitstellen kann. Damit kommt es häufiger zu Zweifelsfällen, in denen eine sicherheitsgerichtete Reaktion eingeleitet wird, obwohl es objektiv gar nicht zu einem relevanten Schutzfeldeingriff kam.

Zwar ist bekannt, einem Schutzfeld ein sogenanntes Warnfeld vorzulagern. Erkannte Objekteingriffe in ein Warnfeld lösen die sicherheitsgerichtete Reaktion noch nicht aus, sondern erzeugen eine optische oder akustische Warnung mit dem Ziel, die Person noch rechtzeitig von einem tieferen Eingriff bis in das Schutzfeld hinein abzuhalten. Warnfelder liefern jedoch keine sicherheitstechnisch verwendbare Information. Das Schutzfeld ist weiterhin so ausgelegt, dass es allein und unabhängig von dem Warnfeld die Sicherheit gewährleisten kann.

Schutzfelder können situationsbedingt angepasst oder umgeschaltet werden. Die EP 1 306 603 B1 offenbart ein Verfahren zum Steuern einer sicherheitsrelevanten Funktion einer Maschine, das die Position und das Bewegungsverhalten von Personen bestimmt und die Schutzfeldgrenzen daran anpasst. Auch aus der EP 2 395 274 B1 sind dynamisch anpassbare Schutzfelder bekannt. Innerhalb der jeweils geltenden Schutzfelder bleibt es jedoch bei einer festen Auslöseschwelle, nur die Geometrie des Schutzfeldes ist dynamisch, die Kriterien einer Schutzfeldverletzung sind es nicht.

Die DE 10 2015 213 078 A1 beschreibt eine Bremslichterkennung eines vorausfahrenden Fahrzeugs, die eine Auslöseschwelle eines aktiven Sicherheitssystems anpasst. Unter einem aktiven Sicherheitssystem versteht aber die DE 10 2015 213 078 A1 keine automatische optische Gefahrenerkennung oder gar Schutzfeldauswertung, sondern ein Fahrerassistenzsystem mit Auslösen einer Warnung, eines Prefills der Bremsen, einer hydraulischen Bremsunterstützung oder einer automatischen Notbremsung. Die Auslöseschwelle wird nicht definiert. Bis auf die Notbremsung handelt es sich um durch den Fahrer ausgelöste Aktionen, und auch eine Notbremsung kann mindestens von dem Fahrer übersteuert werden.

Aus der nachveröffentlichten EP 3 748 216 A1 sind eine Vorrichtung und ein Verfahren zur energieeffizienten Ausführung einer Sicherheitsfunktion bekannt. Eine Schutzeinrichtung, insbesondere eine Stereokamera, erfasst ein auslösendes Ereignis zur Ausführung einer sicherheitsgerichteten Reaktion. Zum Energiesparen sind ein Normalbetrieb und ein reduzierter Betrieb mit einer unterschiedlichen Güte der Sicherheitsfunktion vorgesehen.

Die DE103 60 174 B4 offenbart eine 3D-Lichtlaufzeitkamera, die sicherheitskritische und nicht sicherheitskritische Objekte unterscheidet und ein entsprechendes binäres Schaltsignal generiert, so dass ein überwachtes Arbeitsmittel nur in Betrieb gesetzt ist, falls sich kein sicherheitskritisches Objekt im Erfassungsbereich befindet.

Die US 8 139 204 B2 beschreibt eine 3D-Stereokamera mit aktiver Beleuchtung, deren Leistung aus Gründen des Augenschutzes sukzessive bis zur Betriebsleistung nur unter der Bedingung erhöht wird, dass keine Personen erfasst sind.

In der US 10 325 485 B1 wird ein industrielles Sicherheitssystem vorgestellt, das die Bewegungsbahnen von Personen und Maschinenteilen vorhersagt und die Maschine im Falle einer drohenden Kollision stillsetzt.

Es ist daher Aufgabe der Erfindung, einen verlässlicheren Sicherheitssensor anzugeben.

Diese Aufgabe wird durch einen optoelektronischen Sicherheitssensor und ein Verfahren zur Absicherung einer Maschine nach Anspruch 1 beziehungsweise 13 gelöst. Sicherheit oder sicher ist in dieser Beschreibung, wie im Bereich der Sicherheitstechnik üblich, im Sinne der Maschinensicherheit gemeint. Die konkreten Anforderungen sind in Sicherheitsnormen für Maschinensicherheit beziehungsweise Personenschutz spezifiziert, von denen einleitend einige genannt sind. Die Sicherheitsnormen können sich im Laufe der Zeit verändern, nicht aber hinsichtlich der Grundprinzipien: Fehler werden durch Maßnahmen wie Redundanz, Diversität oder Tests mit einer durch Sicherheitsniveaus definierten Verlässlichkeit abgefangen oder zumindest aufgedeckt.

Die überwachte Maschine arbeitet insbesondere in einem industriellen Umfeld, ist beispielsweise ein Roboter. Der Sicherheitssensor kann in mobiler Anwendung eingesetzt und dafür mit einem Fahrzeug oder einem Maschinenteil mitbewegt montiert sein. Ein Lichtempfänger erfasst Objektdaten, vorzugsweise in zwei oder sogar drei Dimensionen und je nach Ausführungsform beispielsweise in Form eines pixelaufgelösten Bildes oder einer Punktwolke. Die Objektdaten werden ausgewertet, um zu entscheiden, ob ein sicherheitskritisches Objekt erkannt ist, sich also ein sicherheitsrelevantes Objekt in gefährlicher Nähe zu der Maschine befindet. Ist das der Fall, wird eine sicherheitsgerichtete Reaktion ausgelöst. Aus Sicht des Sicherheitssensors bedeutet dies zunächst das Bereitstellen einer entsprechenden Information oder Anweisung, ob eine Gefahr erkannt ist oder nicht. Wie daraufhin tatsächlich auf die Maschine eingewirkt wird, entscheidet in der Regel nicht der Sicherheitssensor selbst, sondern eine direkt oder mittelbar angeschlossene Steuerung.

Die Erfindung geht von dem Grundgedanken aus, das Kriterium für die Entscheidung, ob ein sicherheitskritisches Objekt erfasst ist, situationsbedingt anzupassen. Dieses Kriterium kann, wie einleitend erläutert, als Auslöseschwelle bezeichnet werden, wobei die Schwellennatur sich auf das binäre Ergebnis bezieht, die Bewertung selbst kann ausgesprochen komplex sein und muss keineswegs auf den Vergleich eines einzelnen Werts mit einer einzigen Schwelle beschränkt bleiben. Über das Kriterium wird die Detektionsempfindlichkeit und damit letztlich die Balance zwischen den beiden Fehlern einer übersehenen Gefahr und einer fälschlich als Gefahr eingeschätzten Situation eingestellt.

Ob in einer Situation ein eher empfindliches oder ein eher unempfindliches Kriterium verwendet werden soll, wird von zuvor erfassten Objekten und/oder von weiteren Objekten abhängig gemacht, die zugleich mit einem potentiell sicherheitskritischen Objekt erfasst werden. Bei diesen Objekten, die für die Anpassung des Kriteriums herangezogen werden, kann es sich um sicherheitskritische Objekte, um (noch) nicht sicherheitskritische Objekte und auch Störobjekte handeln. Der eigentlichen Gefahrenbewertung, ob ein sicherheitskritisches Objekt erfasst ist, wird somit eine Vorabeinschätzung vorgeschaltet. Falls gemäß der Vorabeinschätzung eine Gefahrenlage wahrscheinlich ist, wird ein eher empfindliches Kriterium verwendet, um im Zweifelsfall sicherheitsgerichtet zu reagieren. Ist anderseits ein sicherheitskritisches Objekt unwahrscheinlich, so lösen bei einem unempfindlicheren Kriterium nur noch vergleichsweise klare Detektionen eine sicherheitsgerichtete Reaktion aus. Das orientiert sich an dem Aufmerksamkeitsverhalten des Menschen und der Tatsache, dass sich Gefahrensituationen ankündigen und nicht unvermittelt entstehen. Allerdings muss die Anpassung nicht zwingend auf frühere Ereignisse reagieren. Alternativ oder zusätzlich kann die Aufmerksamkeit beziehungsweise Detektionsempfindlichkeit anhand zugleich mit der zu bewertenden Gefahr erkannter Objekte erhöht werden.

Die Erfindung hat den Vorteil, dass es möglich wird, situationsbezogen die Detektionsempfindlichkeit eines Sicherheitssensors so anzupassen, dass er jeweils einen optimalen Arbeitspunkt im Hinblick auf Detektionssicherheit und Verfügbarkeit wählt. Wird eine gefahrbringende Situation erwartet, so reagiert der Sicherheitssensor sehr schnell und empfindlich, während er in anderen Situationen, in denen die Sensordaten keinen unmittelbar bevorstehenden Eingriff signalisieren, sehr robust ist. So wird bei unbeeinträchtigter Zuverlässigkeit und Detektionssicherheit eine optimale Robustheit gegenüber Störeinflüssen erreicht. Die Verfügbarkeit und Detektionssicherheit kann dadurch deutlich verbessert werden.

Die Steuer- und Auswertungseinheit ist bevorzugt dafür ausgebildet, ein sicherheitskritisches Objekt anhand einer Auswertung eines Schutzfeldes auf Objekteingriffe anhand der Objektdaten zu erfassen. Ob also ein Objekt sicherheitskritisch ist oder nicht, wird in dieser Ausführungsform anhand einer Schutzfeldüberwachung entschieden. Ein Schutzfeld ist, je nach Art des Sicherheitssensors, ein in zwei oder drei Dimensionen geometrisch definierter Raumbereich, der nicht betreten werden darf. Nicht jeder Schutzfeldeingriff muss sofort sicherheitskritisch sein, es können noch zusätzliche Bedingungen wie eine Mindestausdehnung oder-dauer gestellt sein. Schutzfelder können vorab festgelegt und somit statisch sein, oder es wird zwischen verschiedenen vorkonfigurierten Schutzfeldern umgeschaltet, oder sie werden dynamisch in ihrer Geometrie angepasst.

An diese Stelle sei betont, dass die erfindungsgemäße Anpassung der Empfindlichkeit eines Kriteriums für die Entscheidung über sicherheitskritische Objekte nicht mit einem dynamischen Schutzfeld verwechselt werden darf. Bei einem dynamischen Schutzfeld wird lediglich dessen Geometrie verändert. Die herkömmliche Entscheidung, ob dieses angepasste Schutzfeld verletzt ist oder nicht, und damit die Empfindlichkeit der Schutzfeldüberwachung, bleibt auch bei einem dynamischen Schutzfeld unverändert. Es handelt sich bei der geometrischen Definition von Schutzfeldern und der Erkennung von Eingriffen in diese Schutzfelder um verschiedene Auswertungsebenen, was sich auch darin zeigt, dass die Erfindung mit statischen wie umgeschalteten und dynamischen Schutzfeldern kombiniert werden kann.

Die Steuer- und Auswertungseinheit ist bevorzugt dafür ausgebildet, anhand der Objektdaten ein potentiell sicherheitskritisches Objekt zu erfassen, bevor es sicherheitskritisch ist, und im Falle der Erfassung eines potentiell sicherheitskritischen Objekts ein empfindlicheres Kriterium zu verwenden. Das ist eine mögliche Konkretisierung eines zuvor oder gleichzeitig erfassten (noch) nicht sicherheitskritischen Objekts, dessen Erfassung das Kriterium für die Entscheidung verändert. Es besteht aufgrund dieser Erfassung eine erhöhte Wahrscheinlichkeit für ein späteres sicherheitskritisches Objekt, insbesondere dasselbe Objekt in dann sicherheitskritischer Position und/oder Bewegung. Deshalb wird die Detektionsempfindlichkeit erhöht.

Die Steuer- und Auswertungseinheit ist bevorzugt dafür ausgebildet, das potentiell sicherheitskritische Objekt anhand einer Auswertung eines Vorbereitungsfeldes auf Objekteingriffe zu erfassen. Ein Vorbereitungsfeld ist ein geometrisch definierter Raumbereich, insoweit ähnlich einem Schutzfeld und vorzugsweise als Hilfszone in Ergänzung eines Schutzfeldes verwendet. Dann grenzt das Vorbereitungsfeld bevorzugt an das Schutzfeld an. Durch die Erkennung von Objekteingriffen in das Vorbereitungsfeld wird erkannt, das eine erhöhte Wahrscheinlichkeit die künftige Erfassung eines sicherheitskritischen Objekts gibt, insbesondere eines kommenden Schutzfeldeingriffs.

Ein Vorbereitungsfeld ähnelt insofern einem herkömmlichen Warnfeld, als es geometrisch ähnlich positioniert und dimensioniert sein kann, einen drohenden Schutzfeldeingriff erkennt und selbst noch keine sicherheitsgerichtete Reaktion auslöst. Allerdings wird ein Vorbereitungsfeld im Gegensatz zu einem Warnfeld vorzugsweise auf sichere Weise entsprechend den Maßnahmen der Sicherheitsnormen überwacht, denn die Veränderung der Empfindlichkeit des Kriteriums ist sicherheitsrelevant. Ein herkömmliches Warnfeld dagegen ist eine reine Zusatzfunktion, mit der die Verfügbarkeit vergrößert werden soll, wobei aber weiterhin das Schutzfeld allein die Sicherheit garantiert. Wird also ein Eingriff in ein herkömmliches Warnfeld übersehen, so hat das keinerlei Auswirkung auf die von dem Warnfeld ganz unabhängige Schutzfeldüberwachung und damit die Sicherheit. Ein übersehener Eingriff in ein Vorbereitungsfeld dagegen hätte eine unangemessene Anpassung der Empfindlichkeit des Kriteriums für die Entscheidung zur Folge, ob ein sicherheitskritisches Objekt erfasst ist, so dass die Überwachung des Vorbereitungsfeldes sicherheitsrelevant ist.

Die Steuer- und Auswertungseinheit ist dafür ausgebildet, das potentiell sicherheitskritische Objekt durch einen zusätzlichen Sensor zu erfassen. Der zusätzliche Sensor liefert in einer Ausführungsform bereits eine ausgewertete Objektinformation, etwa mit einer Position des potentiell sicherheitskritischen Objekts oder durch eigenständige Überwachung eines Vorbereitungsfeldes. Alternativ ist auch denkbar, dass der zusätzliche Sensor die Objektdaten erweitert, beispielsweise um den Sichtbereich des Sicherheitssensors zu erweitern, eine zusätzliche Perspektive zu schaffen oder um ein anderes Messprinzip zu ergänzen, insbesondere im Falle eines nicht optoelektronischen zusätzlichen Sensors.

Die Steuer- und Auswertungseinheit ist bevorzugt dafür ausgebildet, nach einer Erfassung eines sicherheitskritischen Objekts für mindestens eine Freigabezeit ein empfindlicheres Kriterium zu verwenden. In dieser Ausführungsform erfolgt die Anpassung des Kriteriums nicht aufgrund eines potentiell sicherheitskritischen Objekts, obwohl dies in einer Kombination verschiedener Ausführungsformen auch denkbar wäre. Vielmehr war bereits ein sicherheitskritisches Objekt erkannt, auf das eine angemessene sicherheitsgerichtete Reaktion folgte. Es besteht eine erhöhte Wahrscheinlichkeit, dass dieses sicherheitskritische Objekt immer noch anwesend ist, und deshalb wird oder bleibt für eine gewisse Dauer oder Freigabezeit ein empfindlicheres Kriterium eingestellt. Insgesamt ergibt sich eine Art Hysterese der Erkennung eines sicherheitsgerichteten Objekts, in der erst dann wieder in den Freigabezustand ohne Erkennung eines sicherheitsgerichteten Objekts zurückgekehrt wird, wenn dies durch eine empfindliche Erfassung und folglich mit hoher Verlässlichkeit bestätigt wird.

Die Steuer- und Auswertungseinheit ist bevorzugt dafür ausgebildet, bei Erfassung eines Störers ein empfindlicheres Kriterium zu verwenden, wobei insbesondere der Störer anhand von Übersteuerungen erkannt wird. Das Objekt, das für die Anpassung des Kriteriums herangezogen wird, ist nun ein Störobjekt wie beispielsweise ein Reflektor. Befindet sich ein solcher Störer im Sichtbereich des Sicherheitssensors, so ist dessen Detektionsfähigkeit eingeschränkt, und deshalb wird vorsichtshalber ein empfindlicheres Kriterium verwendet. Ob eine solche Situation vorliegt, lässt sich beispielsweise durch übersteuerte Bereiche, Messpunkte oder Pixel erkennen.

Das Kriterium weist bevorzugt eine Mindestanzahl von einem Objekt zugeordneten Messpunkten auf. Es gibt verschiedene Möglichkeiten, die Detektionsempfindlichkeit anzupassen. Eine davon ist, die Anzahl von Messpunkten zu zählen, die einem Objekt zugeordnet werden. Dabei kann ein Objekt beispielsweise als Ergebnis einer Objektsegmentierung erhalten werden. Bei einer Schutzfeldüberwachung kann schlicht die Anzahl von nicht dem Hintergrund zuzuordnenden Messpunkten innerhalb des Schutzfeldes gezählt werden. Je weniger Messpunkte ausreichen, um ein Objekt als erkannt anzusehen, umso empfindlicher wird die Detektion. Messpunkte können Punkte einer Punktewolke, aber auch Pixel eines Bildes sein.

Das Kriterium weist bevorzugt eine Minimalgröße eines Objekts auf. Bei einer hohen Detektionsempfindlichkeit genügt bereits ein kleines Objekt, mit dem Risiko, bereits ein Insekt, einen Regentropfen oder eine kleine Fehldetektionsstelle als sicherheitskritisch anzusehen, umgekehrt muss bei geringer Detektionsempfindlichkeit ein größeres Objekt erkannt sein. Die Kriterien Mindestanzahl und Minimalgröße sind verwandt, aber keineswegs identisch. Die Minimalgröße berücksichtigt die Nachbarschaftsbeziehungen und die Geometrie eines Objekts und misst beispielsweise den Durchmesser einer Punktewolke oder eines Pixelclusters. Dabei spielt auch der Objektabstand eine Rolle, denn beispielsweise eine Kamera erzeugt aus einem fernen Objekt weniger Pixel als aus einem gleich großen nahen Objekt. Somit besteht sind in keine Richtung eindeutige Schlüsse zwischen Anzahl Messpunkte und Objektgröße möglich.

Das Kriterium weist bevorzugt eine Anzahl wiederholter Erfassungen auf. Dies ist ein drittes beispielhaftes Kriterium, wobei die genannten Kriterien beliebig miteinander kombinierbar sind und durch weitere Kriterien ergänzt werden können. Es ist bei Sicherheitssensoren üblich, die Detektion eines sicherheitskritischen Objekts durch weitere Erfassungszyklen (Scans, Frames) bestätigen zu lassen, ehe eine sicherheitsgerichtete Reaktion erfolgt. So wird beispielsweise Lichtblitz oder ein fallender Regentropfen ausgefiltert, der nicht wiederholt erfasst würde. Das Auftreten einer Person dagegen ist auf diesen Zeitskalen kein transientes Ereignis. Es kann nun eine unterschiedliche Anzahl von m aus n Erfassungen gefordert werden, um die Detektionsempfindlichkeit anzupassen.

Der Sicherheitssensor weist bevorzugt einen sicheren Ausgang zur Ausgabe eines binären Sicherheitssignals auf, das anzeigt, ob ein sicherheitskritisches Objekt erfasst ist oder nicht. Der sichere Ausgang ist noch bevorzugter ein sicherer Schaltausgang (OSSD, Output Signal Switching Device) und beispielsweise zweikanalig ausgebildet. Das Signal an dem sicheren Ausgang verwendet eine angeschlossene Steuerung, um zu entscheiden, ob die überwachte Maschine freigegeben oder die sicherheitsgerichtete Reaktion einzuleiten beziehungsweise aufrechtzuerhalten ist.

Der Sicherheitssensor ist bevorzugt als 3D-Kamera, insbesondere Stereokamera oder Lichtlaufzeitkamera ausgebildet. Der hohe Informationsgehalt von 3D-Kameras wird durch eine herkömmliche Schutzfeldauswertung nur unzureichend ausgenutzt. Durch zusätzliche Überwachungen, etwa eines Vorbereitungsfeldes, werden weitere Informationen als sicherheitsrelevant mit herangezogen, um eine Schutzfeldauswertung zu verbessern. Daneben kann auch eine andere Art der Sicherheitsauswertung eingesetzt werden, beispielsweise Speed-and-Separation-Monitoring. Auch dabei ist die erfindungsgemäß angepasste Detektionsempfindlichkeit von Vorteil. Es gibt weitere alternative Möglichkeiten der 3D-Erfassung, beispielsweise 3D-Kameras, die ein strukturiertes Beleuchtungsmuster projizieren und eine Aufnahme mit dem bekannten Beleuchtungsmuster korrelieren, oder auch 2D- beziehungsweise 3D- Laserscanner.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Blockdarstellung eines Sicherheitssensors;
- Fig. 2: ein beispielhaftes Ablaufschema zur Anpassung der Detektionsempfindlichkeit eines Sicherheitssensors; und
- Fig. 3: eine schematische Darstellung eines Schutzfeldes und eines Vorbereitungsfeldes zur Anpassung der Detektionsempfindlichkeit in dem Schutzfeld.

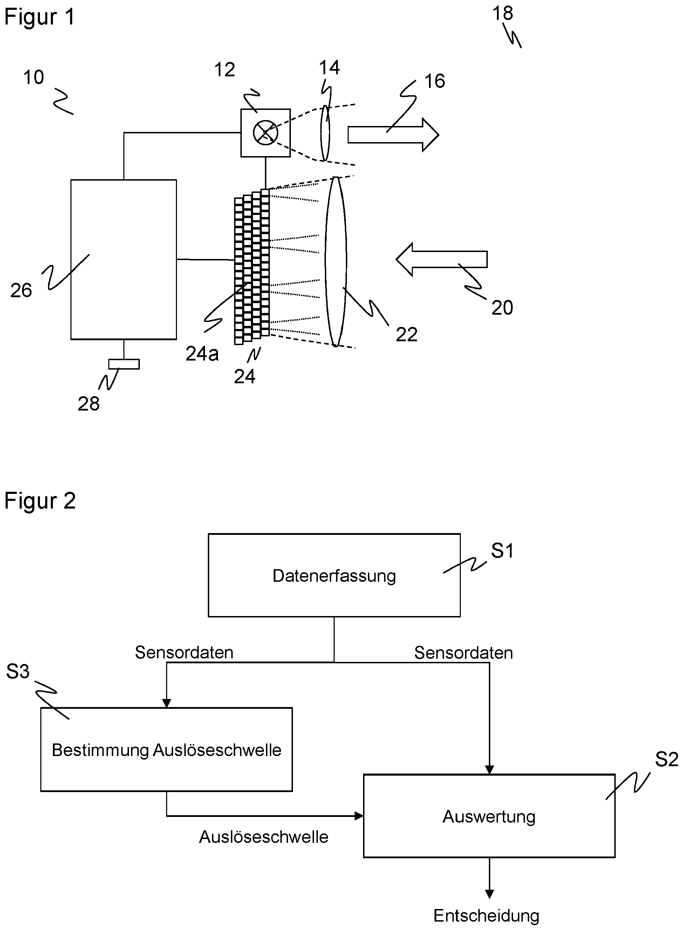

Figur 1 zeigt eine schematische Blockdarstellung eines Sicherheitssensors 10 in einer Ausführungsform als 3D-Lichtlaufzeitkamera (TOF, Time of Flight). Der Sicherheitssensor 10 dient dazu, eine bewegliche Maschine abzusichern. Beispiele sind Maschinen im industriellen Umfeld oder die Arbeitsschritte eines Roboters. Ein weiteres Anwendungsfeld sind Fahrzeuge insbesondere in abgeschlossenen Umgebungen, speziell im Bereich der Fabrik- und Logistikautomatik. Insbesondere sind hier führerlose Fahrzeuge wie AGVs (Automated Guided Vehicle), AMR (Autonomous mobile robot) oder Flurförderzeuge zu nennen.

Eine Beleuchtungseinheit 12 sendet durch eine Sendeoptik 14 moduliertes Sendelicht 16 in einen Überwachungsbereich 18 aus. Als Lichtquelle kommen LEDs oder Laser in Form von Kantenemittern oder VCSEL in Betracht. Die Beleuchtungseinheit 12 ist derart ansteuerbar, dass die Amplitude des Sendelichts 16 mit einer Frequenz typischerweise im Bereich von 1 MHz bis 1000 MHz moduliert wird. Die Modulation ist vorzugsweise periodisch, beispielsweise sinus- oder rechteckförmig. Denkbar sind auch eindeutige Pulsmuster, bei denen ein Korrelationssignal ausgewertet wird.

Trifft das Sendelicht 16 in dem Überwachungsbereich 18 auf ein Objekt, so wird ein Teil als Empfangslicht 20 zu dem Sicherheitssensor 10 zurückgeworfen und dort durch eine Empfangsoptik 22, beispielsweise eine Einzellinse oder ein Empfangsobjektiv, auf einen Bildsensor 24 geführt. Der Bildsensor 24 weist eine Vielzahl von beispielsweise zu einer Matrix oder Zeile angeordneten Lichtempfangselementen oder Empfangspixeln 24a auf. Die Auflösung des Bildsensors 24 kann von zwei oder einigen bis hin zu tausenden oder Millionen Empfangspixeln 24a reichen. In den Empfangspixeln 24a wird das Empfangssignal mit der gleichen Frequenz demoduliert, die auch für die Modulation des Sendelichts 16 verwendet wird (Lock-In-Verfahren). Durch mehrere phasenrichtige Integrationen werden Abtastungen des Empfangssignals vorgenommen, aus dem sich der Phasenversatz zwischen Sendelicht 16 und Empfangslicht 20 und dadurch der Abstand zu dem angetasteten Objekt rekonstruieren lässt.

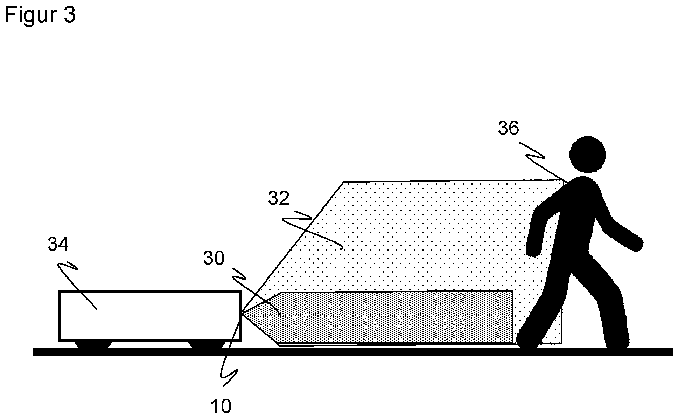

Eine Steuer- und Auswertungseinheit 26 ist mit der Beleuchtungseinheit 12 und dem Bildsensor 24 verbunden, um die Lichtlaufzeitmessung zu koordinieren und die dreidimensionalen Bilddaten aus dem Bildsensor 24 auszulesen. Zusätzlich kann etwa durch Integration über alle Phasen ein zweidimensionales Bild gewonnen werden. Die Steuerund Auswertungseinheit 26 wertet die Bilddaten aus, um festzustellen, ob ein sicherheitskritisches Objekt erfasst ist. In den weiteren Erläuterungen unter Bezugnahme auf die Figuren 2 und 3 geschieht dies durch eine Schutzfeldauswertung. Diese Schutzfelder können vorkonfiguriert sein. Alternativ wird ein Satz Schutzfelder konfiguriert, zwischen denen dann je nach Arbeitsschritt der Maschine oder beispielsweise Geschwindigkeit und/oder Bewegungsrichtung eines abzusichernden Fahrzeugs umgeschaltet wird. Auch dynamische Schutzfelder sind denkbar. Statt einer Schutzfeldauswertung können Objektpositionen und Objektbewegung ausgewertet werden, wie im Falle eines Speedand-Separation-Monitorings.

Eine sichere Schnittstelle 28 ist als OSSD (Output Signal Switching Device) ausgebildet, um im Falle der Erfassung eines sicherheitskritischen Objekts direkt oder über eine Sicherheitssteuerung eine sicherheitsgerichtete Reaktion der mit dem Sicherheitssensor 10 abgesicherten mobilen Maschine auszulösen.

Die Ausführungsform des Sicherheitssensors 10 als 3D-Lichtlaufzeitkamera ist nur ein Beispiel. Alternativ kann der Sicherheitssensor 10 ein anderer optoelektronischer 3D-Sensor sein, beispielsweise eine Stereokamera, eine Kamera mit Auswertung eines projizierten Beleuchtungsmusters oder ein 3D-Scanner in Form eines Mehrlagenscanners oder eines Scanners mit zusätzlicher Abtastbewegung in Elevation sein. Auch lediglich zweidimensionale Sicherheitssensoren sind denkbar, beispielsweise mit zeilenförmigem Bildsensor oder in Form eines 2D-Laserscanners.

Figur 2 zeigt ein beispielhaftes Ablaufschema zur situationsabhängigen Anpassung der Detektionsempfindlichkeit des Sicherheitssensors 10. In einem Schritt S1 erfolgt die Datenerfassung, also beispielsweise die Aufnahme eines 3D-Bildes. Die eigentliche Aufgabe der Auswertung des Sicherheitssensors 10 ist, in einem Schritt S2 aus den verfügbaren und sicherheitstechnisch verwendbaren Sensorinformationen eine Schaltentscheidung abzuleiten, die anzeigt, ob eine Gefahr besteht und eine sicherheitsgerichtete Reaktion einzuleiten ist oder nicht. Das kann eine sehr komplexe Aufgabe sein, beispielsweise die Auswertung eines Schutzfeldes oder die Bewertung einer Position und Bewegung eines Objekts in der Umgebung der abzusichernden Maschine. Wie schon einleitend wird dies in dem vereinfachenden Begriff der Bewertung mit einer Auslöseschwelle zusammengefasst.

Herkömmlich wäre damit die Funktionsweise eines Sicherheitssensors 10 beschrieben. Erfindungsgemäß werden aber in einem Schritt S3 die Sensordaten, in einer Ausführungsform auch Sensordaten eines zusätzlichen Sensors, einer weiteren Auswertung unterzogen. Anhand dieser weiteren Auswertung wird die Auslöseschwelle beziehungsweise die Detektionsempfindlichkeit des Sicherheitssensors 10 angepasst. Sofern gemäß der zusätzlichen Auswertung im Schritt S3 für die nächste Zeit nicht mit einem sicherheitskritischen Objekt zu rechnen ist, wird eine unempfindliche Auslöseschwelle gesetzt, so dass die Detektion sicherheitskritischer Objekte besonders robust ist. Umgekehrt wird eine empfindliche Auslöseschwelle verwendet, wenn zu erwarten ist, dass ein sicherheitskritisches Objekt erfasst wird, beispielsweise weil sich bereits ein Objekt in großer Nähe zu einem Schutzfeld befindet.

Figur 3 zeigt eine schematische Darstellung eines Schutzfeldes 30 und eines an das Schutzfeld 30 angrenzenden Vorbereitungsfeldes 32 zur Anpassung der Detektionsempfindlichkeit in dem Schutzfeld 30. Die Überwachung von Schutzfeldern 30 und Vorbereitungsfeldern 32 ist eine vorteilhafte, aber dennoch nur beispielhafte Ausführungsform für die Schritte S2 und S3 gemäß Figur 2.

Abgesichert wird in Figur 3 ein autonomes Logistikfahrzeug 34 stellvertretend für eine zu überwachende Maschine, wobei der Sicherheitssensor 10 nur als Ausgangspunkt der Überwachung des Schutzfeldes 30 beziehungsweise Vorbereitungsfeldes 32 gezeigt ist.

Die Konfiguration eines Schutzfeldes 30 steht grundsätzlich in freiem Belieben des Anwenders, wobei natürlich die Sicherheitsnormen zu beachten sind, damit das Schutzfeld 30 seine Absicherungsfunktion erfüllt. Es kann vorteilhaft sein, ein relativ kleines Schutzfeld 30 wie in Figur 3 zu konfigurieren, um stationären Strukturen im Betriebsbereich auszuweichen oder um den Wirkbereich von Störeinflüssen zu minimieren. Würde die sichere Schaltentscheidung allein Basis des kleinen Schutzfeldes 30 getroffen, dann basierte das auf einer unnötig kleinen Informationsbasis, denn der Sicherheitssensor 10 erfasst einen deutlich größeren Bereich.

Deshalb wird auch das Vorbereitungsfeld 32 als eine Art Hilfszone auf Objekteingriffe überwacht. Befindet sich hier eine Person oder ein sonstiges sicherheitsrelevantes Objekt 36, so wird im Schritt S3 der Figur 2 eine empfindlichere Auslöseschwelle gesetzt, als wenn das Vorbereitungsfeld 32 frei ist.

Wenn also die an das Schutzfeld 30 angrenzenden Bereiche frei von Objekten 36 sind, was durch die Überwachung des Vorbereitungsfeldes 32 geprüft wird, ist nicht mit einer Gefährdung zu rechnen, und die Auswertung im Schritt S2 der Figur 2 erfolgt mit einer geringeren Detektionsempfindlichkeit. Der Sicherheitssensor 10 ist dann sehr robust gegen Störeinflüsse. Befindet sich umgekehrt ein Objekt 36 in dem Vorbereitungsfeld 32 und damit in der Nähe des Schutzfeldes 30, so ist Vorsicht geboten, und die Detektionsempfindlichkeit wird heraufgesetzt. Auf diese Weise ist immer sichergestellt, dass eine optimale Abstimmung zwischen Robustheit und Detektionssicherheit gewährleistet ist, und zwar unabhängig von der konfigurierten Größe oder Geometrie des Schutzfeldes 30.

Es soll betont werden, dass die Zusatzinformationen, auf deren Basis die Detektionsempfindlichkeit angepasst wird, sicherheitsrelevant sind. Sie werden daher mit der Zuverlässigkeit erfasst und ausgewertet wie bei einer Schutzfeldauswertung. Das ist anders als bei einem herkömmlichen Warnfeld, das eine Art Komfortfunktion darstellt, die allein die Verfügbarkeit betrifft und ganz unabhängig von der eigentlichen Sicherheitsfunktion ist.

Als ein Kriterium zur Entscheidung, ob ein sicherheitskritisches Objekt erfasst ist, kann die Anzahl der Messpunkte innerhalb des Schutzfeldes 30 herangezogen werden. Messpunkte sind beispielsweise die Punkte einer Punktwolke eines Laserscanners oder die Pixel einer Tiefenkarte einer 3D-Kamera. Wenn sich ein sicherheitsrelevantes Objekt 36 in dem Schutzfeld 30 befindet, verursacht es eine Vielzahl von Messpunkten, die innerhalb des Schutzfeldes 30 erfasst werden. Diese werden gezählt und mit einer Auslöseschwelle verglichen.

Ohne die Anpassung der Auslöseschwelle gemäß Schritt S2 müsste eine feste Anzahl an Messpunkten vorgegeben werden. Gerade bei einem kleinen Schutzfeld 30 wäre davon auszugehen, dass ein sicherheitsrelevantes Objekt 36 im Zweifelsfall und unter Berücksichtigung von Störeinflüssen nur sehrwenige Messpunkte innerhalb des Schutzfeldes 30 liefern würde. Vorsichtshalber wäre daher eine fixe Auslöseschwelle sehr empfindlich einzustellen, so dass der Sicherheitssensor 10 bereits bei einer geringen Anzahl von Messpunkten innerhalb des Schutzfeldes 30 eine sicherheitsgerichtete Reaktion auslöst. Dadurch könnte es bei Störeinflüssen schnell zu unnötigen Abschaltungen kommen.

Durch die Überwachung des Vorbereitungsfeldes 32 kann die Auslöseschwelle situationsabhängig modifiziert werden. Erst wenn ein potentiell sicherheitskritisches Objekt 36 in dem Vorbereitungsfeld 32 erkannt ist, wird die Detektionsempfindlichkeit auf die geringe Anzahl von Messpunkten heraufgesetzt. Solange ansonsten kein Objekt 36 in dem Vorbereitungsfeld 32 und damit in der Nähe ist, bedarf es einer größeren Anzahl von Messpunkten in dem Schutzfeld 30, um die sicherheitsgerichtete Reaktion auszulösen. In diesem Modus mit hoher Auslöseschwelle ist der Sicherheitssensor 10 sehr robust gegenüber Störeinflüssen und Fehldetektionen. Die zweistufige Anpassung ließe sich natürlich auch verfeinern, etwa durch gestaffelte Vorbereitungsfelder unterschiedlicher Wertigkeit mit zunehmender Annäherung an das Schutzfeld 30.

In einem konkreten Beispiel erfasst der Sicherheitssensor 10 eine 3D-Tiefenkarte mit einer Vielzahl von Pixeln, die jeweils einen Entfernungswert codieren. Bei freiem Fahrweg oder nur entfernten Objekten 36 außerhalb des Vorbereitungsfeldes 32 wird die Detektionsempfindlichkeit heraufgesetzt und für die Erfassung eines sicherheitskritischen Objekts 36 eine höhere Anzahl von Messpunkten in dem Schutzfeld 30 gefordert, beispielsweise 400 Pixel, ehe es zur Auslösung einer sicherheitsgerichteten Reaktion kommt. Wird dagegen ein Objekt 36 in dem Vorbereitungsfeld 32 und damit am Rand des Schutzfeldes 30 erfasst, so wird die erforderliche Anzahl von Messpunkten in dem Schutzfeld 30 herabgesetzt, beispielsweise auf 100 Pixel. Damit wird die Detektionsempfindlichkeit heraufgesetzt und die Gefahr von Detektionsverlusten vermieden. Es ist durchaus denkbar, dass das Objekt 36 in diesem Zustand bereits teilweise in das Schutzfeld 30 eingedrungen ist, jedoch noch mit einer zu geringen Anzahl von Pixeln, wie etwa 75 Pixeln, so dass es noch nicht als sicherheitskritisches Objekt 36 bewertet wird. Deshalb ist es sinnvoll, wenn das Vorbereitungsfeld 32 das Schutzfeld 30 überlappt beziehungsweise einschließt wie dargestellt, damit die hohe Detektionsempfindlichkeit nicht deshalb aufgegeben wird, weil das Objekt 36 das Vorbereitungsfeld 32 in Richtung Schutzfeld 30 verlässt.

Das Zählen von Messpunkten als Grundlage der Bewertung mit der Auslöseschwelle ist nur ein Beispiel. Andere Kriterien, die für veränderte Detektionsempfindlichkeit angepasst werden können, sind die minimale Ausdehnung eines Objekts 36 oder die geforderte Anzahl aufeinanderfolgender Detektionen. Diese Beispiele sind nicht abschließend, da auch weitere Merkmale wie Texturen oder Kontraste optisch erfassbar sind und je nach gewünschter Detektionsempfindlichkeit unterschiedlich bewertet werden können.

Wenn anders als im Beispiel der Figur 3 bereits ein Schutzfeld 30 durch Eindringen eines Objekts 36 verletzt ist, insbesondere über einen längeren Zeitraum, kann die Auslöseschwelle ebenfalls abgesenkt werden, um die Gefahr von Detektionsverlusten durch Störeinflüsse zu vermeiden. Das lässt sich teilweise durch die angesprochene Überlappung von Schutzfeld 30 und Vorbereitungsfeld 32 erreichen. Eine erkannte Schutzfeldverletzung ist jedoch nochmals eine andere Kategorie, die auch eine andere Anpassung der Detektionsempfindlichkeit mit sich bringen kann, und außerdem ist dies unabhängig davon, ob es eine Überlappung zwischen Schutzfeld 30 und Vorbereitungsfeld 32 gibt.

Sobald also ein Schutzfeldeingriff stattgefunden hat und der Sicherheitssensor 10 ein entsprechendes Schaltsignal an der sicheren Schnittstelle 28 bereitstellt, wird in dieser Ausführungsform die Auslöseschwelle für die kommenden Auslösezyklen auf einen empfindlichen Wert abgesenkt beziehungsweise dort gehalten. Wenn in einem Messzyklus ein sicherheitskritisches Objekt 36 detektiert wurde, ist es wahrscheinlich, dass es sich auch in folgenden Messzyklen noch im Schutzfeld 30 befindet. Wenn das Objekt aus dem Schutzfeld 30 verschwindet, wird die Auslöseschwelle erst nach dem Verschwinden langsam wieder angehoben. Die Anpassung der Auslöseschwelle beschreibt in diesem Sinne eine Hysterese.

Nicht nur potentiell sicherheitskritische Objekte 36 können eine Anpassung der Detektionsempfindlichkeit auslösen, sondern auch Störobjekte. Das sind beispielsweise Reflektoren oder Fremdlichtquellen, aber auch nicht zwingend Objekte im gegenständlichen Sinne, sondern etwa auch fehlende Tiefeninformationen. Insbesondere Retroreflektoren haben eine erhebliche Störwirkung auf die Detektion, indem sie Messpunkte verfälschen oder zerstören. Sie sind aber andererseits durch eine deutliche Signatur erkennbar, etwa durch eine Übersteuerung betroffener Pixel beziehungsweise durch einen extrem hohen Empfangspegel.

Um solchen Detektionseinbußen entgegenzuwirken, kann die Detektionsempfindlichkeit erhöht werden, sobald Störobjekte beispielsweise anhand übersteuerter Pixel erkannt werden. Ein entsprechendes Vorgehen ist insbesondere immer dann möglich, wenn in dem Vorbereitungsfeld 32 ein Indiz oder eine klare Signatur eines relevanten Störeinflusses feststellbar ist. Übersteuerte Pixel in einem Schutzfeld 30 werden vorzugsweise als relevante Objektpixel bewertet.

Zu Anpassung der Detektionsempfindlichkeit können wie beschrieben Erfassungen in dem Vorbereitungsfeld 32 und/oder frühere Erfassungen eines sicherheitskritischen Objekts 36 herangezogen werden, das beispielsweise in einem Schutzfeld 30 erkannt wurde. Eine weitere Alternative stellt die Verwendung externer Daten zum Beispiel von mindestens einem zusätzlichen Sensor dar. Der zusätzliche Sensor überwacht beispielsweise das Vorbereitungsfeld 32 und übergibt dem Sicherheitssensor 10 eine Information, ob sich dort ein Objekt 36 befindet. Denkbar ist weiterhin, die Sensordaten durch den zusätzlichen Sensor zu erweitern und dann die gemeinsamen Sensordaten des Sicherheitssensors 10 und des zusätzlichen Sensors gemäß Figur 2 zu verarbeiten, sei es aus einer neuen Perspektive des zusätzlichen Sensors oder sogar mit dessen anderen optischen oder nicht-optischen Sensorprinzip.

## Patentansprüche

1. Optoelektronischer Sicherheitssensor (10) zur Absicherung einer Maschine (34), der einen Lichtempfänger (24) zur optischen Erfassung von Objektdaten sowie eine Steuer- und Auswertungseinheit (26) aufweist, die dafür ausgebildet ist, anhand der Objektdaten zu entscheiden, ob ein sicherheitskritisches Objekt (36) in einer Umgebung der Maschine (34) erfasst ist, und in diesem Fall eine sicherheitsgerichtete Reaktion auszulösen,
**dadurch gekennzeichnet,**
**dass** die Steuer- und Auswertungseinheit (26) weiterhin dafür ausgebildet ist, in einer der eigentlichen Gefahrenbewertung, ob ein sicherheitskritisches Objekt erfasst ist, vorgeschalteten Vorabeinschätzung situationsbezogen einen Arbeitspunkt im Hinblick auf Detektionssicherheit und Verfügbarkeit und damit eine Balance zwischen den beiden Fehlern einer übersehenen Gefahr und einer fälschlich als Gefahr eingeschätzten Situation einzustellen, indem in Abhängigkeit von zuvor und/oder gleichzeitig erfassten Objekten eine Auslöseschwelle und damit die Empfindlichkeit eines Kriteriums angepasst wird, ob eine sicherheitsgerichtete Reaktion zu erfolgen hat oder nicht.

2. Sicherheitssensor (10) nach Anspruch 1,
wobei die Steuer- und Auswertungseinheit (26) dafür ausgebildet ist, ein sicherheitskritisches Objekt (36) anhand einer Auswertung eines Schutzfeldes (30) auf Objekteingriffe anhand der Objektdaten zu erfassen.

3. Sicherheitssensor (10) nach Anspruch 1 oder 2,
wobei die Steuer- und Auswertungseinheit (26) dafür ausgebildet ist, anhand der Objektdaten ein potentiell sicherheitskritisches Objekt (36) zu erfassen, bevor es sicherheitskritisch ist, und im Falle der Erfassung eines potentiell sicherheitskritischen Objekts (36) ein empfindlicheres Kriterium zu verwenden.

4. Sicherheitssensor (10) nach Anspruch 3,
wobei die Steuer- und Auswertungseinheit (26) dafür ausgebildet ist, das potentiell sicherheitskritische Objekt (36) anhand einer Auswertung eines Vorbereitungsfeldes auf Objekteingriffe zu erfassen.

5. Sicherheitssensor (10) nach Anspruch 3 oder 4,
wobei die Steuer- und Auswertungseinheit (26) dafür ausgebildet ist, das potentiell sicherheitskritische Objekt (36) durch einen zusätzlichen Sensor zu erfassen.

6. Sicherheitssensor (10) nach einem der vorhergehenden Ansprüche,
wobei die Steuer- und Auswertungseinheit (26) dafür ausgebildet ist, nach einer Erfassung eines sicherheitskritischen Objekts (36) für mindestens eine Freigabezeit ein empfindlicheres Kriterium zu verwenden.

7. Sicherheitssensor (10) nach einem der vorhergehenden Ansprüche,
wobei die Steuer- und Auswertungseinheit (26) dafür ausgebildet ist, bei Erfassung eines Störers ein empfindlicheres Kriterium zu verwenden, wobei insbesondere der Störer anhand von Übersteuerungen erkannt wird.

8. Sicherheitssensor (10) nach einem der vorhergehenden Ansprüche,
wobei das Kriterium eine Mindestanzahl von einem Objekt (36) zugeordneten Messpunkten aufweist.

9. Sicherheitssensor (10) nach einem der vorhergehenden Ansprüche,
wobei das Kriterium eine Minimalgröße eines Objekts (36) aufweist.

10. Sicherheitssensor (10) nach einem der vorhergehenden Ansprüche,
wobei das Kriterium eine Anzahl wiederholter Erfassungen aufweist.

11. Sicherheitssensor (10) nach einem der vorhergehenden Ansprüche,
der einen sicheren Ausgang (28) zur Ausgabe eines binären Sicherheitssignals aufweist, das anzeigt, ob ein sicherheitskritisches Objekt (36) erfasst ist oder nicht.

12. Sicherheitssensor (10) nach einem der vorhergehenden Ansprüche,
der als 3D-Kamera, insbesondere Stereokamera oder Lichtlaufzeitkamera ausgebildet ist.

13. Verfahren zur Absicherung einer Maschine (34), bei dem Objektdaten optisch erfasst und ausgewertet werden, um zu entscheiden, ob ein sicherheitskritisches Objekt (36) in einer Umgebung der Maschine (34) erfasst wird, und in diesem Fall eine sicherheitsgerichtete Reaktion auszulösen,
**dadurch gekennzeichnet,**
**dass** in einer der eigentlichen Gefahrenbewertung, ob ein sicherheitskritisches Objekt erfasst ist, vorgeschalteten Vorabeinschätzung situationsbezogen ein Arbeitspunkt im Hinblick auf Detektionssicherheit und Verfügbarkeit und damit eine Balance zwischen den beiden Fehlern einer übersehenen Gefahr und einer fälschlich als Gefahr eingeschätzten Situation eingestellt wird, indem in Abhängigkeit von zuvor und/oder gleichzeitig erfassten Objekten eine Auslöseschwelle und damit die Empfindlichkeit eines Kriteriums angepasst wird, ob eine sicherheitsgerichtete Reaktion zu erfolgen hat oder nicht.

## Claims

1. An optoelectronic safety sensor (10) for safeguarding a machine (34), the sensor (10) comprising a light receiver (24) for optical detection of object data and a control and evaluation unit (26) configured to use the object data to decide whether a safety-critical object (36) is detected in a vicinity of the machine (34) and, in this case, to trigger a safety-oriented reaction,
**characterized in that** the control and evaluation unit (26) is further configured, in a preliminary assessment preceding the actual hazard assessment as to whether a safety-critical object is detected, to determine in a situation-related manner an operating point with regard to detection safety and availability and thus a balance between the two errors of an overlooked hazard and a situation incorrectly assessed as a hazard, by adjusting, depending on previously and/or simultaneously detected objects, a triggering threshold and thus the sensitivity of a criterion whether or not a safety-oriented reaction has to take place.

2. The safety sensor (10) according to claim 1,
wherein the control and evaluation unit (26) is configured to detect a safety-critical object (36) on the basis of an evaluation of a protective field (30) for object intrusions on the basis of the object data.

3. The safety sensor (10) according to claim 1 or 2,
wherein the control and evaluation unit (26) is configured to detect a potentially safety-critical object (36) on the basis of the object data before it is safety-critical and to use a more sensitive criterion in the case of detection of a potentially safety-critical object (36).

4. The safety sensor (10) according to claim 3,
wherein the control and evaluation unit (26) is configured to detect the potentially safety-critical object (36) on the basis of an evaluation of a preparation field for object intrusions.

5. The safety sensor (10) according to claim 3 or 4,
wherein the control and evaluation unit (26) is configured to detect the potentially safety-critical object (36) by an additional sensor.

6. The safety sensor (10) according to any of the preceding claims,
wherein the control and evaluation unit (26) is configured to use a more sensitive criterion for at least a release time after a detection of a safety-critical object (36).

7. The safety sensor (10) according to any of the preceding claims,
wherein the control and evaluation unit (26) is configured to use a more sensitive criterion when detecting an interferer, wherein in particular the interferer is detected on the basis of overloads.

8. The safety sensor (10) according to any of the preceding claims,
wherein the criterion comprises a minimum number of measuring points associated with an object (36).

9. The safety sensor (10) according to any of the preceding claims,
wherein the criterion comprises a minimum size of an object (36).

10. The safety sensor (10) according to any of the preceding claims,
wherein the criterion comprises a number of repeated detections.

11. The safety sensor (10) according to any of the preceding claims,
comprising a safe output (28) for outputting a binary safety signal indicating whether or not a safety-critical object (36) is detected.

12. The safety sensor (10) according to any of the preceding claims,
which is configured as a 3D camera, in particular stereo camera or time-of-flight camera.

13. A method for safeguarding a machine (34), wherein object data are optically detected and evaluated in order to decide whether a safety-critical object (36) is detected in a vicinity of the machine (34) and, in this case, to trigger a safety-oriented reaction,
**characterized in that**, in a preliminary assessment preceding the actual hazard assessment as to whether a safety-critical object is detected, an operating point with regard to detection safety and availability and thus a balance between the two errors of an overlooked hazard and a situation incorrectly assessed as a hazard is set in a situation-related manner, by adjusting, depending on previously and/or simultaneously detected objects, a triggering threshold and thus the sensitivity of a criterion as to whether or not a safety-oriented reaction has to take place.

## Revendications

1. Capteur de sécurité optoélectronique (10) pour la protection d'une machine (34), comprenant un récepteur de lumière (24) pour la détection optique de données d'objet et une unité de commande et d'évaluation (26) configurée pour décider, à l'aide des données d'objet, si un objet critique pour la sécurité (36) est détecté à proximité de la machine (34) et, dans ce cas, pour déclencher une réaction de sûreté,
**caractérisé en ce que** l'unité de commande et d'évaluation (26) est en outre configurée dans une évaluation préalable du danger proprement dite, en amont de l'évaluation du danger pour savoir si un objet critique pour la sécurité est détecté, un point de fonctionnement en ce qui concerne la sécurité et la disponibilité de la détection et donc un équilibre entre les deux erreurs d'un danger négligé et d'une situation évaluée de manière incorrecte comme un danger est réglé en fonction de la situation, en ajustant, en fonction des objets détectés précédemment et/ou simultanément, un seuil de déclenchement et donc la sensibilité d'un critère pour savoir si une réaction de sûreté doit avoir lieu ou non.

2. Capteur de sécurité (10) selon la revendication 1,
dans lequel l'unité de commande et d'évaluation (26) est configurée pour détecter un objet critique pour la sécurité (36) sur la base d'une évaluation d'un champ de protection (30) pour les intrusions d'objets sur la base des données d'objets.

3. Capteur de sécurité (10) selon la revendication 1 ou 2,
dans lequel l'unité de commande et d'évaluation (26) est configurée pour détecter un objet potentiellement critique pour la sécurité (36) sur la base des données de l'objet avant qu'il ne soit critique pour la sécurité et pour utiliser un critère plus sensible en cas de détection d'un objet potentiellement critique pour la sécurité (36).

4. Capteur de sécurité (10) selon la revendication 3,
dans lequel l'unité de commande et d'évaluation (26) est configurée pour détecter l'objet potentiellement critique pour la sécurité (36) sur la base d'une évaluation d'un champ de préparation pour les intrusions d'objets.

5. Capteur de sécurité (10) selon la revendication 3 ou 4,
dans lequel l'unité de commande et d'évaluation (26) est configurée pour détecter l'objet potentiellement critique pour la sécurité (36) par un capteur supplémentaire.

6. Capteur de sécurité (10) selon l'une des revendications précédentes,
dans lequel l'unité de commande et d'évaluation (26) est configurée pour utiliser un critère plus sensible pendant au moins un temps de libération après une détection d'un objet critique pour la sécurité (36).

7. Capteur de sécurité (10) selon l'une des revendications précédentes,
dans lequel l'unité de commande et d'évaluation (26) est configurée pour utiliser un critère plus sensible lors de la détection d'un perturbateur, le perturbateur étant notamment détecté sur la base de surcharges.

8. Capteur de sécurité (10) selon l'une des revendications précédentes,
dans lequel le critère comprend un nombre minimal de points de mesure associés à un objet (36).

9. Capteur de sécurité (10) selon l'une des revendications précédentes,
dans lequel le critère comprend une taille minimale d'un objet (36).

10. Capteur de sécurité (10) selon l'une des revendications précédentes,
dans lequel le critère comprend un nombre de détections répétées.

11. Capteur de sécurité (10) selon l'une des revendications précédentes, comprenant une sortie de sécurité (28) pour délivrer un signal de sécurité binaire indiquant si un objet critique pour la sécurité (36) est détecté ou non.

12. Capteur de sécurité (10) selon l'une des revendications précédentes,
qui est configuré comme une caméra 3D, notamment une caméra stéréo ou une caméra à temps de vol.

13. Procédé de sécurisation d'une machine (34), dans lequel des données d'objet sont détectées optiquement et évaluées afin de décider si un objet critique pour la sécurité (36) est détecté à proximité de la machine (34) et, dans ce cas, de déclencher une réaction de sûreté,
**caractérisé en ce que**, dans une évaluation préalable du danger proprement dite, en amont de l'évaluation du danger pour savoir si un objet critique pour la sécurité est détecté, un point de fonctionnement en ce qui concerne la sécurité et la disponibilité de la détection et donc un équilibre entre les deux erreurs d'un danger négligé et d'une situation évaluée de manière incorrecte comme un danger est réglé en fonction de la situation, en ajustant, en fonction des objets détectés précédemment et/ou simultanément, un seuil de déclenchement et donc la sensibilité d'un critère pour savoir si une réaction de sûreté doit avoir lieu ou non.
